Europäisches Patentamt

European Patent Office

Office européen des brevets

(19)

(11) Publication number: **0 244 236**
**A2**

(12) # EUROPEAN PATENT APPLICATION

(21) Application number: **87303836.8**

(22) Date of filing: **29.04.87**

(51) Int. Cl.³: **C 08 B 37/10**

(30) Priority: **30.04.86 DK 1969/86**

(43) Date of publication of application:
**04.11.87 Bulletin 87/45**

(84) Designated Contracting States:
**AT BE CH DE ES FR GB GR IT LI LU NL SE**

(71) Applicant: **NOVO INDUSTRI A/S**
**Novo Allé**
**DK-2880 Bagsvaerd(DK)**

(72) Inventor: **Nielsen, Jorgen Ilum**
**Gedebakken 9**
**DK-3520 Farum(DK)**

(72) Inventor: **Ostergard, Per Bjorn**
**Rugvaenget 2**
**DK-4681 Herfolge(DK)**

(74) Representative: **Brown, John David et al,**
**FORRESTER & BOEHMERT Widenmayerstrasse 4/I**
**D-8000 München 22(DE)**

(54) Process for the preparation of LMW Heparin.

㊼ A method for production of low molecular weight heparin (LMW-heparin) by enzymatic batch depolymerization of heparin with heparinase wherein heparin is depolymerized to a desired weight average molecular weight by depolymerization to the corresponding number average molecular weight. The method enables depolymerization to a desired weight average molecular weight by measuring the increase in UV-absorption (preferably at 230–235 nm) $\Delta A235$ and halting the depolymerization when $\Delta A235$ has reached the calculated value corresponding to the desired number average molecular weight $M_n$.

EP 0 244 236 A2

The present invention relates to a method for the production of low molecular weight heparin (LMW-heparin) by enzymatic depolymerization of heparin.

Conventional heparin is a heterogenous mixture of mucopolysaccharides covering a molecular weight range from 5000 - 50000 daltons with a number average molecular weight of about 10 - 14000 daltons.

Heparin acts directly or indirectly on the function of a number of proteins particularly the enzymes of the coagulation cascade.

The effects of heparin are influenced by a number of factors, such as the distribution of functional groups in the molecule and the molecular weight. Thus it is firmly established that the latter plays an important role for the activity of heparin, especially the inactivation of Thrombin and Factor Xa mediated by Antithrombin III.

Antithrombin activity demands a minimum heparin molecular weight corresponding to about 18 monosaccharides i.e. about 5400 daltons whereas anti Factor Xa activity can be expressed by heparin molecules as small as 5-6 saccharide units 1500-1800 daltons.

A series of other effects of heparin e.g. antithrombotic effect (heparin oligosaccharides containing 18 monosaccharides or less seem to have poor antithrombotic activity) influence on ADP-induced thrombocyte aggregation, bioavailability after s.c. administration, inhibition by $PF_4$ and HRG as well as the activity against coagulation enzymes of the intrinsic pathway responsible for generating Factor Xa are strongly influenced by the molecular weight of heparin.

In recent years the interest has been centered on heparin fragments or - fractions with high XaI/ antithrombin activity with molecular weight from 4000 daltons to upwards of 6000, since such substances have been reported to have good antithrombotic efficiency and at the same time no or little tendency to cause bleeding complications. They also show enhanced bioavailability especially after subcutaneous administration.

Since the selectivity of heparin action is correlated to the molecular weight, it is likely that a relatively narrow molecular weight range exists in which heparin activity is optimal.

A method for preparing LMW-heparin with a specific, desired molecular weight and a narrow molecular weight distribution i.e. low polydispersity would therefore be advantageous.

The method of this invention enables attainment of any desired molecular weight range of depolymerization product from heparin.

LMW-heparin can be prepared in low yield from conventional heparin by fractionation (DOS 2,944,792 and 2,945,595). Most LMW-heparin is, however, prepared by depolymerization of heparin by either chemical or enzymatic methods followed by fractionation, if necessary (cfr. A. Horner, Heparin, Kakkar, eds. Thomas, 1976 and Perlin et al. Carbohydrate Res. 18, 185 (1971).

Chemical depolymerization of heparin is described in EP published patent applications Nos. 0037,319, 0076,279 and 0014,184, US patent No. 4,351,938, and GB patent No. 2,002,406.

Enzymatic depolymerization is described in US patent No. 3,766,167, GB patent No. 2,002,406, EP published patent application No. 0014,184, and US patent No. 4,396,762.

A major problem inherent to all of the known batch depolymerization processes is to stop the depolymerization reaction  at the correct average molecular weight. Moreover, the depolymerization reaction results in heparin fragments of smaller or larger size than the desired molecular weight, even in the absence of side reactions.

In the known depolymerization processes for depolymerization of heparin which use inorganic depolymerization reagents (nitrous acid, hydrogen peroxide, etc.) no preference exists as to size of molecule attacked or as to position within the molecule of the bond to be broken. According to R.J. Linhardt et al., Biochem.Biophys.Acta 702 (1982) 197-203 not even the enzyme heparinase makes any such distinction the mode of action of heparinase being random endolytic.

This means that the polydispersity of any heparin depolymerization mixture develops in a statistically predictable way as a function of the degree of depolymerization. Especially at the time when average molecular weight is just above the desired value a large proportion of the fragments have the desired molecular weight but due to the random endolytic nature of the depolymerization they also have a proportionally large chance of becoming further depolymerized to give fragments of suboptimal size. A batch depolymerization should be halted at about this time.

However, heretofore the art has not developed satisfactory methods for controlling the depolymerization of heparin so as to obtain high yields of a predetermined LMW-heparin product.

An object of this invention is to provide a method for controlling an enzymatic depolymerization of heparin by heparinase in aqueous medium reaction mixture. It is a further object of the present invention to provide a method for the production of LMW-heparin with a desired average molecular weight.

Brief Statement of the Invention.

The present invention provides a process for the preparation of LMW-heparin by which heparin is partially depolymerized with heparinase in an aqueous medium, characterized in measuring the increase in light absorption during the course of such a depolymerization, the increase being caused by generation of an increasing proportion of unsaturated heparin degradation products as the enzymatic depolymerization proceeds, and halting the enzymatic depolymerization when the increase in absorption has reached a value corresponding to the desired number average molecular weight $M_n$ and the corresponding desired weight average molecular weight $M_w$, whereupon the LMW-heparin product is recovered from the reaction mixture.

The average molecular weight of a heparin depolymerization reaction mixture may be estimated in a number of ways based on e.g. GPC-HPLC, viscosity measurement, light scattering or chemical or physical-chemical determination of functional groups created in the depolymerization process.

Most of the methods mentioned such as GPC-HPLC are time consuming and not easily adapted to large scale production and in fact the majority of the known processes used in manufacture of LMW-heparin are based on empirical methods relying on careful control of starting composition and reaction conditions to obtain the desired molecular weight at the end of the depolymerization reaction. However, due to inevitable variations during the depolymerization reaction, e.g. variations in enzyme activity, the molecular weight of the end product may vary from one batch to another and making it difficult to obtain a uniform product in high yield.

If a product with the correct average molecular weight is to be produced by each production batch, the depolymerization reaction must be stopped immediately when the desired average molecular weight has been reached in the depolymerization reaction mixture. This requires that the change in the average molecular weight be followed by measurements for molecular weight determination having little or no lag time.

Heretofore no fast practical method existed for molecular weight determination of a depolymerization reaction mixture (containing LMW-heparin). One aspect of the present invention provides such a method.

The average molecular weight of heparin or a LMW-heparin may be given as the number average molecular weight ($M_n$), i.e. weight/number of moles, or as weight average molecular weight ($M_w$) or peak molecular weight ($M_{peak}$). $M_w$ or $M_{peak}$ are normally used to characterize heparin or LMW-heparin products.

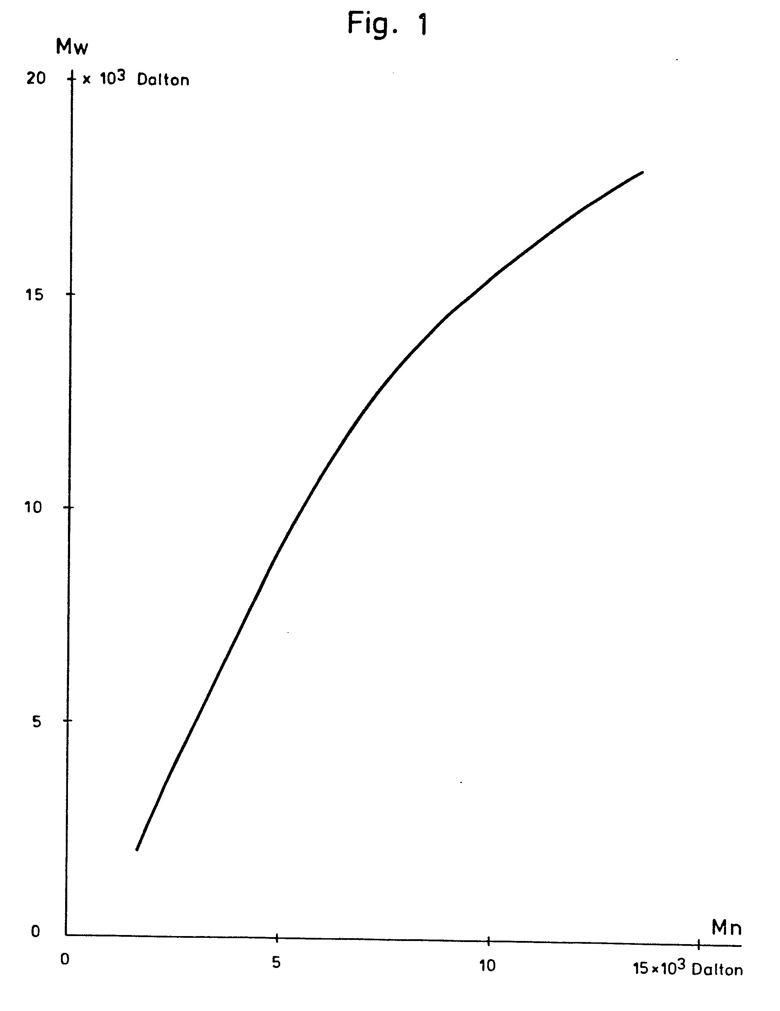

It has now been confirmed experimentally that the polydispersity (D), i.e. $M_w/M_n$, of a given heparin depolymerization reaction mixture changes in a regular way during the enzymatic depolymerization reaction of heparin as shown in fig. 1.

The present invention is based on the fact that there has been developed a fast and reliable method to determine $M_n$ during the depolymerization of heparin with heparinase. As fig. 1 provides the correlation between $M_w$ and $M_n$ the depolymerization of heparin to LMW-heparin of a given, desired $M_w$, can be achieved by depolymerization to a corresponding number average molecular weight $M_n$.

The enzymatic depolymerization process using heparinase lends itself to a spectrophotometric number average molweight ($M_n$) determination since the enzymatic process is eliminative creating one reducing endgroup and one endgroup consisting of a $\Delta$ 4.5-unsaturated-iduronic acid derivative having a distinct UV-absorption at 230-235 nm. The molar absorption coefficient for a number of LMW-heparin fragments of di-,tetra-,hexa-, and oligo saccharides was published by Linker and Hovingh (Biochem. 11(1972), 563-568). The average value of the published molar absorption coefficients is 5500.

$$\text{An equation such as} \quad \frac{1}{M_n} = \frac{1}{M_{n,u}} + \frac{\Delta A_{235}}{c \cdot \varepsilon} \qquad (1)$$

giving the relationship between number average molecular weight ($M_n$) and increase in absorption at 235nm is easily derived.

In formula (1) $M_n$ is the number average molecular weight of the depolymerized product, $M_{n,u}$ is the number average molecular weight of the heparin substrate, c is the substrate concentration (g/l), $\Delta A_{235}$ is the increase in absorption at 235 nm and $\varepsilon$ is the molar absorption coefficient.

Calculation of $M_n$ is possible when $M_n$ of the heparin substrate $(M_{n,u})$, substrate concentration (c, g/l) and the absorption coefficient $(\varepsilon)$ of the unsaturated depolymerization products are known and $\Delta A_{235}$ is measured.

In a number of experiments heparin was depolymerized with heparinase partially purified using hydroxyl apatite chromatography according to Linker and Hovingh (Methods in Enzymology 28(1972), 902-911).

The number average molecular weight $M_n$, was calculated using equation (1) and using the published value of $\varepsilon$ = 5500, and compared to $M_n$ determined by GPC-HPLC.

It was consistently found however that the calculated value of $M_n$ ($M_n(\Delta A)$) differed from the value of $M_n$ found using HPLC ($M_n(HPLC)$), by up to 20%.

Rearrangement of (1) into

$$\Delta A_{235} = c \cdot \varepsilon (\frac{1}{M_n} - \frac{1}{M_{n,u}}) \qquad (2)$$

allows calculation of an absorption increase $\Delta A_{235}$ corresponding to a desired number average molecular weight $M_n$. But again experiments showed that if the depolymerization was halted at the calculated value of $\Delta A_{235}$ the actual $M_n$ determined by HPLC was considerably higher than the desired $M_n$ if the value of $\varepsilon$ = 5500 found by Hovingh and Linker was used.

It was concluded that the poor correspondance between $M_n(\Delta A)$ and $M_n(HPLC)$ was caused by the use of the value of $\varepsilon$ = 5500.

Rearrangement of equation (1) into

$$\mathcal{E} = \frac{\Delta A_{235}}{c} \cdot \frac{M_n \cdot M_{n,u}}{(M_{n,u} - M_n)} \qquad (3)$$

shows that $\mathcal{E}$ may be calculated using known values of c and $M_{n,u}$ and simultaneously determined values of $\Delta A_{235}$ and $M_n$(HPLC).

In this way a value of $\mathcal{E}$ = 7600 was found which gave close correllation between calculated $M_n(\Delta A)$ and observed $M_n$(HPLC) in a number of experiments.

The possibility of calculating a correct value of $M_n$ based on the easily measured $\Delta A_{235}$ is basis for practice of the present invention according to which a batch enzymatic depolymerization of heparin is allowed to proceed until the calculated value of $\Delta A_{235}$ is reached whereupon the heparin depolymerization reaction is halted and the reaction mixture is worked up.

The heparinase used according to the present invention is prepared in per se known manner as described by Hovingh and Linker (Methods in Enzymology _28_ (1972), 902-911 and J.Biol.Chem. _245_ (1970), 6170-6175) by culturing _Flavobacterium_ _heparium_ on a heparin containing substrate, cell harvesting and cell rupture by sonication and purification by among others chromatography on hydroxyapatite. The degradation of heparin with heparinase is conducted in an aqueous medium as described for instance by Hovingh and Linker (J.Biol.Chem. _240_ (1965), 3724-3728). When the desired $M_n$ value of the depolymerization mixture has been reached the heparinase is inactivated by known means, e.g. by lowering pH or a short heat treatment.

The LMW-heparin product is then precipitated by known means, e.g. precipitation with alcohol, and purified by methods well known in the art, e.g. bleaching, sterile filtration and alcohol precipitation.

Calculation of the increase in the absorption at 230-235nm $\Delta A_{235}$ corresponding to the desired $M_w$ of the product is made as follows:

a)   reading on fig. 1 of $M_n$ corresponding to the desired $M_w$ and

b)   calculation of $\Delta A_{235}$ corresponding to $M_n$ from a) by means of the above formula (2) using the value 7600 for $\mathcal{E}$.

$\Delta A_{235}$ is measured by a spectrophotometer after acidification of the sample preferably to pH < 2.5. It is obvious for the person skilled in the art that the increase in UV-absorption caused by the formation of unsaturated degradation products by the action of heparinase on heparin may be measured at other wave lengths than indicated here. The absorption coefficient is, however, preferably measured at 235nm because it has its maximum at this wave length.

The depolymerization is halted when $\Delta A_{235}$ has reached the calculated value whereupon the LMW-heparin product is precipitated by addition of alcohol (preferably 0.6-10 vol/vol).

The heparin depolymerization reaction is preferably conducted at a temperature of 25-40°C and at a pH of 6-8. Although the present invention is illustrated by means of a process in which heparinase is used in free form immobilized heparinase may also be used.

Example 1 illustrates the concordance of $M_n$ as determined by A and $\Delta A$ measurements to HPLC measurements ($M_n$ ($\Delta A$) to $M_n$ (HPLC)) of samples throughout the course of a batch depolymerization of heparin.

Example 1

2.5 g heparin sodium, USP, $M_w$ = 17300, $M_n$ = 12400 daltons were dissolved in 25 ml 0.1 M sodium acetate, 0.01 M calcium acetate pH 7.0.

Heparinase, 0.8 ml, 1500 u/ml, specific activity 1050 u/mg was dissolved in 25 ml of 0.1 M sodium acetate.

One heparinase unit is defined according to Hovingh and Linker, Methods in Enzymol., 28(1972), 902-911.

The heparin substrate and the enzyme solution were mixed and incubated with gentle stirring in a water bath, thermostated at 30°C.

A sample taken immediately after mixing was diluted with 1.7 M perchloric acid, pH less than 2.5, filtered and the absorption was measured at 235 nm.

The absorption measurement was repeated a number of times as shown in the table below and simultaneously taken samples were heated briefly on a boiling water bath to destroy enzyme activity, cooled, diluted 5-fold with 0.5 M sodium sulphate and filtered and the molecular weight was analyzed by GPC-HPLC.

The GPC-HPLC analysis was carried out using Waters I-125 and I-60 columns in series with 0.5 M sodium sulphate as eluent, 0.5 ml/min, monitored by refractive index detection, and the molecular weight was calculated according to retention time, using a non-linear standard curve based on dextran and heparin fragment standards.

The number average molecular weight, $M_n$, was calculated from equation (1) using the absorption increase at 235nm, $\mathcal{E}$ = 7600, c = 50 and $M_{n,u}$ = 12400.

The results are given in the table below and as seen, close agreement was obtained between the calculated and observed number average molecular weights.

Table I

| Time (hours) | $A_{235}$ | $\Delta A_{235}$ | $M_n(\Delta A)$ (daltons) | $M_n$(HPLC) (daltons) | $M_n(\Delta A)/M_n$(HPLC) % |
|---|---|---|---|---|---|
| 0 | 4.5 | 0 | - | - | - |
| 1.0 | 28.83 | 24.33 | 6912 | 6750 | 102.4 |
| 2.0 | 47.67 | 43.17 | 5148 | 4661 | 110.4 |
| 3.0 | 63.43 | 58.93 | 4242 | 4261 | 99.6 |
| 3.5 | 70.03 | 65.53 | 3951 | 3863 | 102.3 |
| 4.0 | 77.5 | 73.00 | 3666 | 3830 | 95.7 |
| 4.5 | 83.2 | 78.7 | 3475 | 3565 | 97.5 |
| 5.5 | 94.4 | 89.9 | 3153 | 3145 | 100.3 |
| 22 | 242.5 | 238 | 1415 | 1405 | 100.7 |

101.1

±4.4(S.D.)

## Example 2

The purpose of the experiments outlined below was to produce LMW-heparin of a weight average molecular weight $(M_w)$ of 6500 ± 500 dalton.

From figure 1 the number average molecular weight $(M_n)$ corresponding to a $M_w$ = 6500 dalton was found to be about 3500 dalton.

Five different heparins (see table below) were chosen for enzymatic depolymerization. The change in optical density at 235 nm $(\Delta A_{235}$(calculated)) corresponding to a $M_n$ in the reaction mixture of 3500 dalton (in one experiment 3400 dalton) was calculated for each heparin from equation 2 using c = 50 mg/ml, $\varepsilon$ = 7600 and the $M_{n,u}$'s of the actual heparin lots (see table).

The enzymatic degradation of the heparins was performed as follows:

Heparin was dissolved in a concentration of 50 mg/ml in 0.1 M sodium acetate buffer pH 7.0 containing traces of calcium (0.0005 to 0.01 M). The solution was heated to 30°C and heparinase was added in the amount necessary to depolymerize the heparin to the desired $M_n$ in about 48 hours.

The change in optical density at 235 nm $(\Delta A_{235})$ was measured repeatedly in samples of reaction mixtures after dilution with 1.7 M perchloric acid, pH below 2.5. When $\Delta A_{235}$ was equal to $\Delta A_{235}$(calculated) the enzymatic depolymerization was halted.

When $\Delta A_{235}$ had reached the calculated value, the LMW-heparin product was precipitated by addition of alcohol and the depolymerized product was purified by methods well known in the art e.g. bleaching, sterile filtration and alcohol precipitation. Characteristics of the products from 5 independent experiments are shown in the following table.

## Table II

| Experiment No. | Batch size (g) | $M_{n,u}$ of heparin (dalton) | Desired $M_n$ in product (dalton) | $\Delta A_{235}$ (calculated) | Amount of heparinase used (NOVO units/g heparin) |
|---|---|---|---|---|---|
| 1 | 1000 | 10100 | 3500 | 70.94 | 53 |
| 2 | 1000 | 12400 | 3500 | 77.93 | 65 |
| 3 | 1200 | 13900 | 3400 | 84.43 | 73 |
| 4 | 1000 | 11600 | 3500 | 75.81 | 60 |
| 5 | 1000 | 11200 | 3500 | 74.64 | 62 |

| Experiment No. | Final $\Delta A_{235}$ in reaction mixture | Yield of product % (w/w) | $M_n$ in product (dalton) | $M_w$ in product (dalton) | Biological activity* of product IU/mg |
|---|---|---|---|---|---|
| 1 | 71.76 | 87.8 | 3690 | 6150 | |
| 2 | 77.40 | 93.9 | 3840 | 6510 | 76 |
| 3 | 83.97 | 90.6 | 3710 | 6630 | 77 |
| 4 | 75.07 | 90.5 | 3660 | 6180 | 82 |
| 5 | 74.80 | 93.0 | 3610 | 6610 | 82 |

* Biological activity by an amidolytic antifactor Xa assay using the 1. International LMW-heparin standard (National Institute for Biological Standards and Controls, London) as reference standard.

It appears from the above that all the final 0244236 heparin products have a weight average molecular weight ($M_w$) within the desired range.

The features disclosed in the foregoing description, in the following claims and/or in the accompanying drawings may, both separately and in any combination thereof, be material for realising the invention in diverse forms thereof.

CLAIMS

1.    A process for the production of LMW-heparin by which heparin is partially depolymerized with heparinase in an aqueous medium characterized in that the increase in light absorption caused by the creation of unsaturated degradation LMW-products by the action of heparinase on heparin is measured during the depolymerization reaction, the reaction is halted when the increase in absorption has reached a value corresponding to the desired number average molecular weight $M_n$ and the corresponding weight average molecular $M_w$ weight and LMW-heparin is recovered from the reaction mixture.

2.    A process according to claim 1, wherein the increase in absorption coefficient is measured at 230-235 nm.

3.    A process according to claim 1, wherein the heparinase is used in free form.

Fig. 1

0244236